# FASCICULE DE BREVET EUROPEEN

(11) **EP 1 422 990 B1**
(45) Date de publication et mention de la délivrance du brevet: **13.02.2013**
(21) Numéro de dépôt: 01967421.7
(22) Date de dépôt: 03.09.2001
(51) Int. Cl.: A01D 34/416

(54) **FIL DE COUPE POUR DEBROUSSAILLEUSES ET TAILLE-BORDURES**
MÄHFADEN FÜR BUSCH- UND KANTENTRIMMER
CUTTING WIRE FOR BRUSH CUTTERS AND EDGE TRIMMERS

(43) Date de publication de la demande: 02.06.2004
(73) Titulaire: Speed France S.A.S., 69400 Arnas (FR)
(72) Inventeur: LEGRAND, Emmanuel, 01480 Villeneuve (FR)
(74) Mandataire: Regimbeau
(86) Numéro de dépôt international: PCT/FR2001/002730
(87) Numéro de publication internationale: WO 2003/020008

(56) Documents cités:
- WO-A-97/19584
- WO-A-97/43469
- DE-A- 19 632 721
- FR-A- 2 658 698
- FR-A- 2 793 648
- US-A- 4 054 993
- US-A- 4 186 239

## Description

La présente invention concerne les fils de coupe destinés à tailler et couper la végétation, qu'il s'agisse de broussailles ou d'herbe, utilisables sur des appareils de motoculture à tête rotative, communément appelés débroussailleuses et taille-bordures.

Ces appareils de motoculture sont généralement équipés d'un moteur thermique ou électrique qui entraîne en rotation, à une vitesse élevée pouvant être comprise entre environ 3000 et 12000 tours/minute, une tête tournante supportant un ou plusieurs fils de coupe. Au cours de cette rotation rapide de la tête, sous l'effet de la force centrifuge, le ou les fils de coupe se déploient radialement et balayent ainsi une zone circulaire, à l'intérieur de laquelle ils exercent un effet tranchant sur la végétation rencontrée.

Les fils de coupe, couramment fabriqués et commercialisés et destinés à une telle utilisation, sont des monofilaments extérieurement lisses, le plus souvent en matière synthétique telle que polyamide, de section circulaire dans le cas le plus simple.

Pour améliorer les caractéristiques, performances ou autres qualités de tels fils de coupe, les efforts de développement ont, jusqu'à présent, porté sur les aspects suivants :
a) Réalisation de fils de coupe de section particulière : outre la section ronde traditionnelle, on a déjà proposé des fils de coupe de section carrée, polygonale (par exemple pentagonale), en étoile, dentelée, etc...
b) Recherche de fils de coupe à fonctionnement plus silencieux, par exemple grâce à une conformation ou à un aspect de surface étudiés à cet effet.
c) Propositions de fils de coupe caractérisés par leur composition : réalisations de fils de coupe en une matière particulière, ou de fils de coupe caractérisés par une association particulière de matériaux (formant par exemple, respectivement, l'âme et la "peau" du fil), ou encore de fils de coupe caractérisés par l'introduction de charges particulières dans leur matière de base, telles que des charges abrasives.

Toutefois, malgré les améliorations déjà procurées par les diverses voies de recherche explorées, les fils de coupe restent perfectibles. En particulier, les efforts réalisés jusqu'à présent pour améliorer le pouvoir coupant de ces fils, qui est naturellement la principale qualité recherchée, restent insuffisants.

La présente invention a donc pour but d'améliorer les fils de coupe pour débroussailleuses et taille-bordures, sous l'aspect notamment de leur pouvoir coupant, par une solution techniquement simple, efficace et économique, et compatible avec de nombreuses formes et matières de fils.

A cet effet, l'invention a essentiellement pour objet un fil de coupe pour débroussailleuses et taille-bordures, caractérisé en ce qu'il présente, extérieurement, des formations du genre dents se succédant sur la longueur de ce fil de coupe.

Le fil de coupe possède au moins une arête coupante s'étendant dans la direction longitudinale de ce fil de coupe, et les dents sont réalisées sur au moins une arête longitudinale coupante du fil, ces dents se succédant sur la longueur de cette arête coupante.

Ainsi, l'invention propose un fil de coupe qui n'est caractérisé ni par une section particulière, ni par une composition spécifique, mais qui comporte une succession de dents, lui conférant un profil longitudinal dentelé, ceci sur toute sa longueur. En particulier, une ou plusieurs arêtes longitudinales coupantes de ce fil peuvent constituer le "support" desdites dents.

Dans tous les cas, le fil est ainsi rendu plus coupant, c'est-à-dire qu'il coupe plus facilement la végétation, qu'il s'agisse d'herbe ou de broussailles.

De plus, le fil objet de l'invention procure une coupe plus franche de la végétation, ceci représentant un avantage supplémentaire. Avec un fil de coupe traditionnel de section ronde ou carrée, les brins d'herbe coupés sont endommagés à leur extrémité, d'où un jaunissement rapide sous l'effet du soleil. Au contraire, avec le fil de coupe très tranchant objet de l'invention, et comme l'ont démontré les essais effectués par le Demandeur, l'herbe est coupée de façon beaucoup plus nette, ce qui réduit l'effet de jaunissement.

Dans la mesure où le fil de coupe possède plusieurs arêtes coupantes, s'étendant dans la direction longitudinale de ce fil, toutes les arêtes coupantes peuvent présenter des dents se succédant sur la longueur de ces arêtes coupantes.

Selon une autre possibilité, applicable aussi dans le cas où le fil de coupe possède plusieurs arêtes coupantes, seules certaines de ces arêtes coupantes présentent des dents , se succédant sur la longueur de ces arêtes coupantes, tandis que les autres arêtes conservent un aspect lisse.

Dans la mesure où le fil de coupe possède au moins deux arêtes coupantes pourvues de dents , se succédant sur la longueur de ces arêtes coupantes, il peut être prévu :
- que ces dents sont identiques sur toutes les arêtes coupantes concernées, et sont situées en correspondance, d'une arête coupante à une autre,
- ou que ces dents sont identiques sur toutes les arêtes coupantes concernées, mais se trouvent décalées longitudinalement, d'une arête coupante à une autre,
- ou encore que dents sont différentes, d'une arête coupante à une autre.

En ce qui concerne l'aspect particulier desdites formations du genre dents ou analogues, prévues sur les arêtes coupantes du fil de coupe, ou hors de ces arêtes, diverses configurations sont envisageables. Ainsi, les formations en question peuvent prendre l'aspect :
- de dents avec formes et hauteurs constantes, conférant notamment à chaque arête coupante concernée un aspect de "dents de scie",
- ou de dents avec formes et/ou hauteurs irrégulières, mais pouvant se répéter selon un "pas" prédéfini, notamment sur la longueur de l'arête coupante concernée,

De toute façon, l'invention sera mieux comprise à l'aide de la description qui suit, en référence au dessin schématique annexé représentant, à titre d'exemples, quelques formes de réalisation de ce fil de coupe pour débroussailleuses et taille-bordures :
Figure 1 est une vue en perspective d'un tronçon de fil de coupe conforme à la présente invention ;
Figures 2 à 5 sont des vues en perspective, similaires à figure 1, montrant des tronçons d'autres fils de coupe non couverts par les revendications;
Figure 6 représente, en vue de côté, encore un autre tronçon d'un fil de coupe non couvert par les revendications;
Figures 7 et 8 sont des vues partielles, de côté, de fils de coupe non couverts par les revendications avec dentures de profils particuliers.

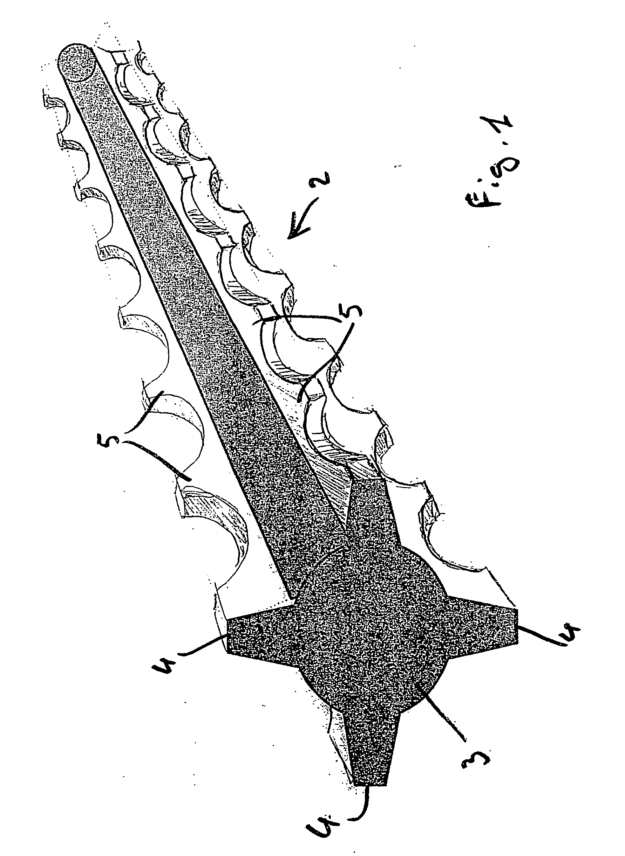

La figure 1 montre, à grande échelle, un tronçon d'un fil de coupe 2, pour débroussailleuses ou taille-bordures, en faisant apparaître la section de ce fil. Le fil de coupe 2 présente ici une section en étoile, avec un corps central 3 de section ronde, et quatre arêtes coupantes longitudinales 4, disposées en croix dans la partie extérieure ou périphérie du fil 2.

Sur chaque arête coupante longitudinale 4 du fil 2, sont ici formées des dents 5 régulières dans leur forme et leur hauteur, et de profil arrondi concave, qui se succèdent sur la longueur de cette arête coupante 4. Les dents 5 ainsi formées sur chaque arête coupante 4 peuvent se situer en correspondance avec les dents 5 identiques formées sur les autres arêtes coupantes 4. Dans l'ensemble, avec toutes ses arêtes coupantes 4 présentant un aspect de "dents de scie", le fil de coupe 2 possède un haut pouvoir coupant.

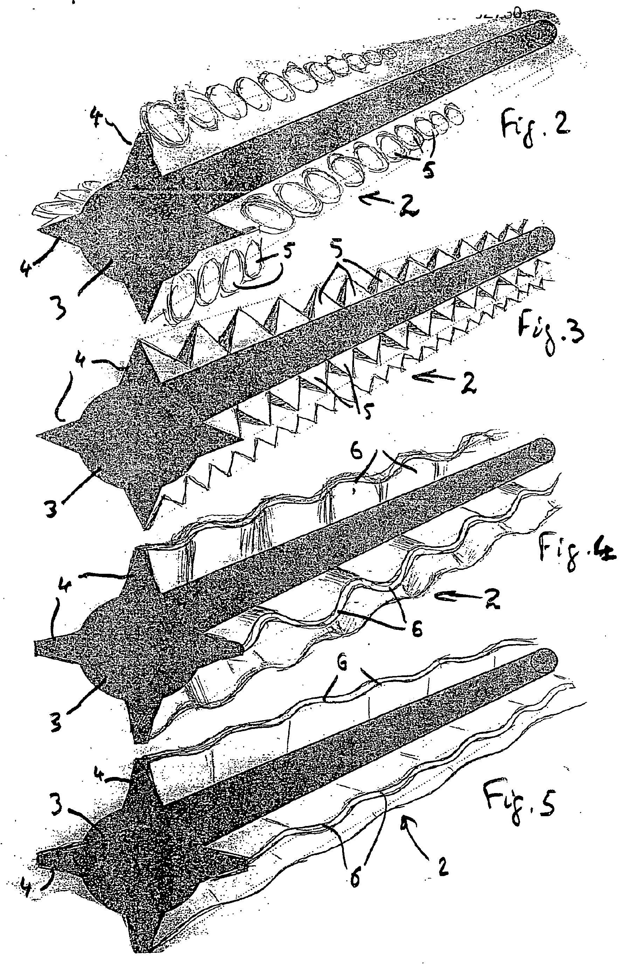

La figure 2, sur laquelle les éléments correspondants ont été désignés par les mêmes repères numériques, montre une variante de ce fil de coupe 2. Sur les arêtes coupantes longitudinales 4 sont ici formées des dents 5 régulières dans leur forme et leur hauteur, mais de profil arrondi convexe, pouvant présenter l'aspect de petites pastilles circulaires, qui se succèdent sur la longueur de chaque arête coupante 4.

La figure 3 montre une autre forme de réalisation d'un fil de coupe 2 . Ce fil 2 présentant toujours la même forme de base, des dents 5 régulières dans leur forme et leur hauteur, et d'allure triangulaire, sont formées ici sur les arêtes coupantes longitudinales 4.

La figure 4 montre encore une autre forme de réalisation du fil de coupe 2. Ce fil 2 possédant toujours la même forme de base, les arêtes coupantes longitudinales 4 possèdent ici des ondulations 6, qui se répètent dans le sens de la longueur desdites arêtes coupantes 4. Dans l'exemple de la figure 4, les ondulations 6 sont relativement accentuées.

Une variante de ce dernier fil de coupe 2 est illustrée par la figure 5. Les arêtes coupantes longitudinales 4 possèdent ici des ondulations 6 moins accentuées, qui se répètent toujours dans le sens de la longueur de ces arêtes coupantes 4.

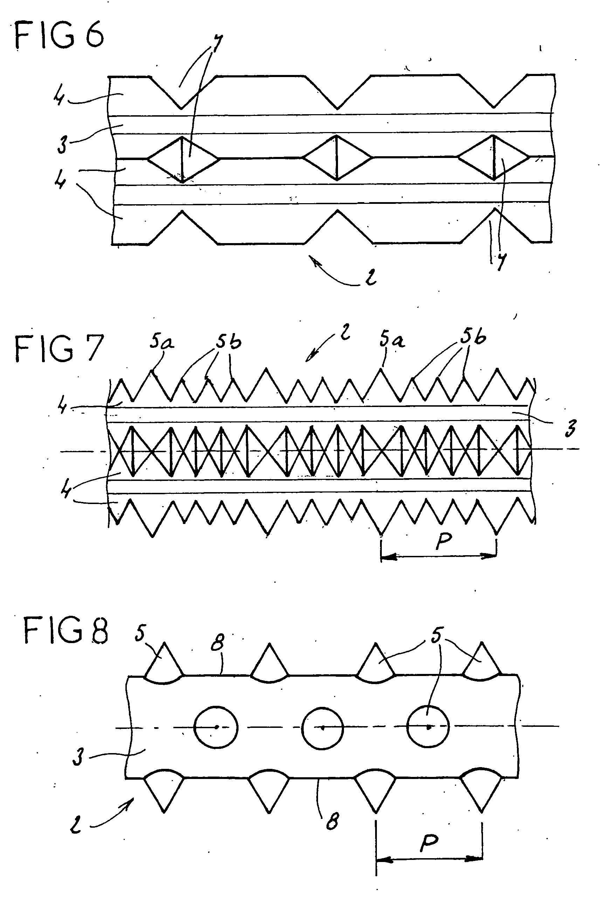

La figure 6 montre une forme de réalisation particulière du fil de coupe 2, présentant encore la même forme de base. Dans ce cas, les dents visant à améliorer le pouvoir coupant du fil 2 résultent d'encoches ou entailles 7, se succédant à intervalles réguliers sur chaque arête coupante longitudinale 4.

Comme l'illustre la figure 7, les formations du genre dents, réalisées sur les arêtes coupantes longitudinalement 4 du fil de coupe 2, peuvent comporter des dents 5a de plus grande hauteur, entre lesquelles sont formées d'autres dents 5b de plus petite hauteur, toutes les dents 5a et 5b étant d'allure triangulaire, et le motif formé par ces dents 5a et 5b se répétant selon un pas P sur la longueur de chaque arête coupante 4.

Enfin, comme le montre la figure 8, les dents 5 peuvent se succéder selon un pas P prédéterminé, dans la direction longitudinale du fil de coupe 2, en étant séparées les unes des autres par des intervalles lisses 8, dépourvus de dents. Ce mode de réalisation est notamment applicable à des dents 5 formées non pas sur des arêtes coupantes longitudinales du fil de coupe 2, mais hors des arêtes coupante, directement sur la surface extérieure de ce fil 2.

L'on ne s'éloignerait pas du cadre de l'invention (telle que définie dans les revendications annexées) :
- en réalisant le fil de coupe avec toute section, et en toutes dimensions ;
- en réalisant ce fil de coupe en toutes matières, simples ou composites ;
- en prévoyant des arêtes coupantes plus ou moins nombreuses, pourvues des dents
- en réalisant ces dents avec des formes de détail diverses ;
- en obtenant lesdits dents par tout procédé approprié.

## Revendications

1. Fil de coupe pour débroussailleuses et taille-bordures, **caractérisé en ce qu'**il comporte un corps central (3) et au moins une arête coupante (4) s'étendant dans la direction longitudinale du corps central du fil de coupe et faisant saillie du corps central, des dents (5) séparées par des espaces inter-dentaires présentant un profil arrondi concave étant réalisées sur au moins une arête longitudinale coupante (4) du fil (2) en se succédant sur la longueur de cette arête coupante (4).

2. Fil de coupe selon la revendication 1, **caractérisé en ce qu'**il possède plusieurs arêtes coupantes (4), s'étendant dans sa direction longitudinale, toutes les arêtes coupantes (4) présentant des dents (5) se succédant sur la longueur de ces arêtes coupantes (4).

3. Fil de coupe selon la revendication 1, **caractérisé en ce qu'**il possède plusieurs arêtes coupantes (4), s'étendant dans sa direction longitudinale, et **en ce que** seules certaines de ces arêtes coupantes (4) présentent des dents (5) se succédant sur la longueur de ces arêtes coupantes (4), tandis que les autres arêtes (4) sont dépourvues de dents.

4. Fil de coupe selon l'une quelconque des revendications 1 à 3, **caractérisé en ce qu'**il possède au moins deux arêtes coupantes (4) pourvues de dents (5) se succédant sur la longueur de ces arêtes coupantes (4), et **en ce que** ces dents (5) sont identiques sur toutes les arêtes coupantes (4) concernées, et sont situées en correspondance, d'une arête coupante (4) à une autre.

5. Fil de coupe selon l'une quelconque des revendications 1 à 3, **caractérisé en ce qu'**il possède au moins deux arêtes coupantes (4) pourvues de dents (5) se succédant sur la longueur de ces arêtes coupantes (4), et **en ce que** ces dents (5) sont identiques sur toutes les arêtes coupantes (4) concernées, mais se trouvent décalées longitudinalement d'une arête coupante (4) à une autre.

6. Fil de coupe selon l'une quelconque des revendications 1 à 3, **caractérisé en ce qu'**il possède au moins deux arêtes coupantes (4) pourvues de dents (5) se succédant sur la longueur de ces arêtes coupantes (4), et **en ce que** ces dents (5) sont différentes d'une arête coupante (4) à une autre.

7. Fil de coupe selon l'une quelconque des revendications 1 à 6, **caractérisé en ce que** les dents (5) présentent des formes et hauteurs constantes d'une dent à l'autre.

## Claims

1. Cutting wire for brush cutters and edge trimmers, **characterised in that** it comprises a central body (3) and at least one cutting edge (4) extending in the longitudinal direction of the central body of the cutting wire and protruding from the central body, teeth (5) separated by inter-tooth spaces having a rounded concave profile being formed on at least one longitudinal cutting edge (4) of the wire (2) in succession over the length of this cutting edge (4).

2. Cutting wire according to claim 1, **characterised in that** it has several cutting edges (4), extending in its longitudinal direction, with all of the cutting edges (4) having teeth (5) in succession over the length of these cutting edges (4).

3. Cutting wire according to claim 1, **characterised in that** it has several cutting edges (4), extending in its longitudinal direction, and **in that** only some of these cutting edges (4) have teeth (5) in succession over the length of these cutting edges (4), while the other edges (4) are devoid of teeth.

4. Cutting wire according to any of claims 1 to 3, **characterised in that** it has at least two cutting edges (4) provided with teeth (5) in succession over the length of these cutting edges (4), and **in that** these teeth (5) are identical over all of the cutting edges (4) concerned, and are located in correspondence, from one cutting edge (4) to another.

5. Cutting wire according to any of claims 1 to 3, **characterised in that** it has at least two cutting edges (4) provided with teeth (5) in succession over the length of these cutting edges (4), and **in that** these teeth (5) are identical over all of the cutting edges (4) concerned, but are located longitudinally offset from one cutting edge (4) to another.

6. Cutting wire according to any of claims 1 to 3, **characterised in that** it has at least two cutting edges (4) provided with teeth (5) in succession over the length of these cutting edges (4), and **in that** these teeth (5) are different from one cutting edge (4) to another.

7. Cutting wire according to any of claims 1 to 6, **characterised in that** the teeth (5) have shapes and heights that are constant from one tooth to the other.

## Patentansprüche

1. Schneidfaden für Freischneider und Kantenschneider,
**dadurch gekennzeichnet, dass** er einen Mittelkörper (3) und wenigstens eine sich in der Längsrichtung des Mittelkörpers des Schneidfadens erstreckende und am Mittelkörper vorstehende Schneidkante (4) umfasst, wobei auf wenigstens einer Längsschneidkante (4) des Fadens (2) Zähne (5) vorgesehen sind, die durch Zwischenräume mit einem konkav abgerundeten Profil voneinander getrennt sind, und längs der Schneidkante (4) aufeinanderfolgen.

2. Schneidfaden nach Anspruch 1,
**dadurch gekennzeichnet, dass** er mehrere sich in seiner Längsrichtung erstreckende Schneidkanten (4) besitzt, wobei alle Schneidkanten (4) Zähne (5) aufweisen, die längs der Schneidkanten (4) aufeinanderfolgen.

3. Schneidfaden nach Anspruch 1,
**dadurch gekennzeichnet, dass** er mehrere sich in seiner Längsrichtung erstreckende Schneidkanten (4) besitzt, und dass nur einige der Schneidkanten (4) Zähne (5) aufweisen, die längs der Schneidkanten (4) aufeinanderfolgen, während die anderen Schneidkanten (4) zahnlos sind.

4. Schneidfaden nach einem der Ansprüche 1 bis 3,
**dadurch gekennzeichnet, dass** er wenigstens zwei Schneidkanten (4) besitzt, die mit längs der Schneidkanten (4) aufeinanderfolgenden Zähnen (5) versehen sind, und dass die Zähne (5) auf allen betreffenden Schneidkanten (4) identisch sind und von einer Schneidkante (4) zur anderen in gegenseitiger Übereinstimmung angeordnet sind.

5. Schneidfaden nach einem der Ansprüche 1 bis 3,
**dadurch gekennzeichnet, dass** er wenigstens zwei Schneidkanten (4) besitzt, die mit längs der Schneidkanten (4) aufeinanderfolgenden Zähnen (5) versehen sind, und dass die Zähne (5) auf allen betreffenden Schneidkanten (4) identisch sind, jedoch von einer Schneidkante (4) zur anderen längs versetzt angeordnet sind.

6. Schneidfaden nach einem der Ansprüche 1 bis 3,
**dadurch gekennzeichnet, dass** er wenigstens zwei Schneidkanten (4) besitzt, die mit längs der Schneidkanten (4) aufeinanderfolgenden Zähnen (5) versehen sind, und dass die Zähne (5) von einer Schneidkante (4) zur anderen unterschiedlich sind.

7. Schneidfaden nach einem der Ansprüche 1 bis 6,
**dadurch gekennzeichnet, dass** die Zähne (5) von einem Zahn zum anderen gleichbleibende Formen und Höhen haben.
